Europäisches Patentamt

European Patent Office

Office européen des brevets

(11) Publication number: **0 449 387 A1**

# EUROPEAN PATENT APPLICATION

(21) Application number: 91200729.1

(22) Date of filing: 28.03.91

(51) Int. Cl.5: **F04D 1/00**, F04D 29/08, F04D 29/12

(30) Priority: 29.03.90 NL 9000741

(43) Date of publication of application:
02.10.91 Bulletin 91/40

(84) Designated Contracting States:
BE DE ES FR GB IT NL SE

(71) Applicant: PL AUTOMOTIVE B.V.
Hopelerweg 250
NL-6488 XX Kerkrade(NL)

(72) Inventor: Cremers, Paul Johan Hubert
Pomsfeldstraat 8
NL-6371 VH Landgraaf(NL)
Inventor: Melchers, Hendrikus Wilhelmus
Maria
Ons Limburgstraat 45
NL-6466 CA Kerkrade(NL)
Inventor: Keulen, Rudolf René Jozef
Kastanjelaan 11
NL-6176 DB Spaubeek(NL)

(74) Representative: Kooy, Leendert Willem et al
OCTROOIBUREAU VRIESENDORP & GAADE
P.O. Box 266
NL-2501 AW The Hague(NL)

(54) **Liquid pump and pertaining counter race ring.**

(57) A liquid pump has a housing with a wall section that is provided with a bore (2) in which a shaft sealing (6) is disposed and through which a drive shaft (3) extends. A transport means (5) is mounted on the drive shaft (3) for transporting the liquid. The shaft sealing (6) has a race ring (12) connected to the housing, through which ring the drive shaft (3) extends, and a counter race ring (15) mounted on the drive shaft (3), against a surface (17) of which an end face (18) of the transport means (5) abuts, wherein the surface (17) of the counter race ring together with the end face (18) of the transport means defines a boundary face (19), recesses (22) being provided at least at the boundary face (19) defined by the end face (18) of the transport means and the surface (17) of the counter race ring.

FIG. 1

The present invention relates to a liquid pump, comprising a housing with a wall section that is provided with a bore in which a shaft sealing is disposed and through which a drive shaft extends, wherein a transport means is mounted on the drive shaft for transporting the liquid, wherein the shaft sealing comprises a race ring connected to the housing, through which ring the drive shaft extends, and a counter race ring mounted on the drive shaft, against a surface of which an end face of the transport means abuts, and wherein the surface of the counter race ring together with the end face of the transport means defines a boundary face.

A liquid pump of this type is known, and it is e.g. applied as cooling water pump in the cooling system of internal combustion engines. In these pumps the counter race ring is pressed onto the drive shaft by means of a rubber sealing ring, and it is preferably made of a sintered material. The transport means is fan-shaped, and it is made of cast or pressed metal.

It has been found that in this known liquid pump, slit corrosion occurs at the end face of the fan at the boundary face between the fan and the counter race ring. As a result thereof the counter race ring assumes an oblique position with respect to the drive shaft, for the counter race ring is only attached to the drive shaft through the rubber sealing ring. This may lead to leakage of the sealing, thus causing damage to the internal combustion engine and/or to the environment.

The present invention is aimed at removing this drawback.

For this purpose, according to the invention, a liquid pump of the type as described in the introduction is provided, which pump is characterized in that recesses have been provided at least at the boundary face defined by the end face of the transport means and the surface of the counter race ring.

Unexpectedly, tests have shown that on account of these recesses, corrosion on the end face of the transport means is considerably reduced or even entirely prevented. At this time it is not possible to provide an adequate explanation for this phenomenon. Possibly the recesses allow liquid turbulences during rotation of the drive shaft, so that the liquid between the transport means and the counter race ring is continuously renewed.

As the recesses are preferably provided in the surface of the counter race ring, they can easily be provided during the manufacture of the counter race ring in e.g. a pressing machine, so that extra processing steps are not required. As a counter race ring of the invented type can also be applied in already known liquid pumps or other drive means, exclusive rights are also claimed for the counter race ring itself.

In a preferred embodiment the recesses at the boundary face extend at least from the edge portion of the boundary face facing away from the drive shaft. The favourable working thus obtained may be related to the fact that penetrated liquid can easily be discharged again. The recesses preferably extend at least up to the edge portion of the boundary face facing towards the drive shaft.

The recesses are preferably distributed at least substantially evenly over the boundary face. The total surface area of the recesses in the boundary face preferably equals substantially half of the total surface area of the boundary face. It was found that with such a surface distribution, a corrosion-preventing working could be obtained which extends over at least substantially the entire boundary face.

In a preferred embodiment the recesses are constituted by a number of substantially radially extending slots. Preferably the number of slots equals at least twelve.

Other characteristics and advantages of the liquid pump and counter race ring according to the invention will become clear after reading the following figure description of a preferred embodiment of the liquid pump according to the invention, in which reference is made to the accompanying drawing, in which:

figure 1 shows a longitudinal section of a portion of a preferred embodiment of the liquid pump according to the invention in an enlargement of about five times the actual size,

figure 2 shows a top view of a counter race ring which is suitable for a liquid pump as shown in figure 1, and

figure 3 shows a cross-section of the counter race ring along the line III-III in figure 2.

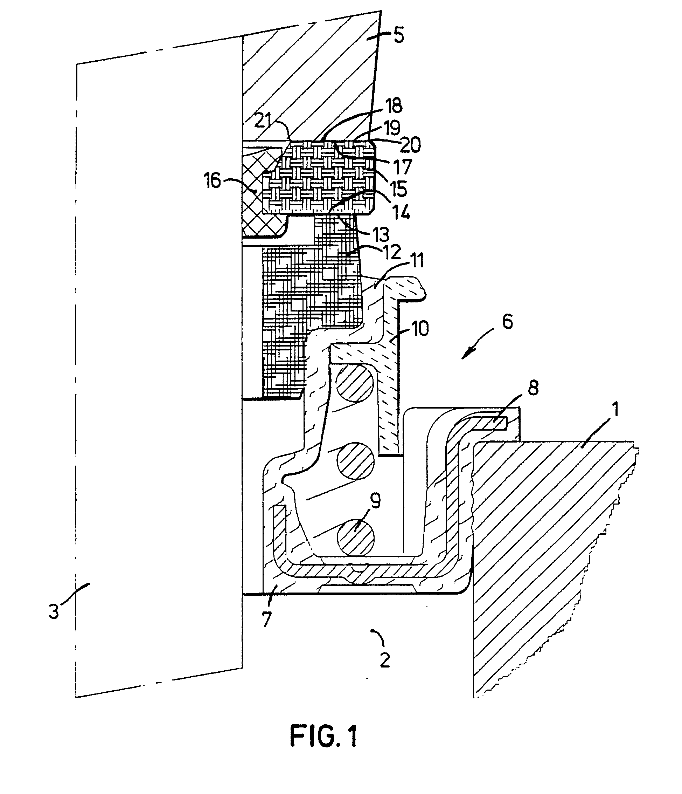

Figure 1 shows a longitudinal section of a portion of the liquid pump according to a preferred embodiment of the invention. In a wall section 1 of the housing of the liquid pump a bore 2 is provided through which a drive shaft 3 extends. The drive shaft 3 is rotatably supported by a bearing (not shown). A transport means 5 is mounted on the drive shaft 3 for transporting the liquid within the liquid pump. The transport means 5 has the usual fan shape and is made of cast or pressed metal.

In the bore 2 a shaft sealing 6 is applied with a press fit, and the drive shaft 3 extends through this bore. The shaft sealing 6 comprises a housing 8 coated with rubber 7 in which a holder 10 is resiliently disposed by means of a spiral spring 9. In the holder 10 a race ring 12 is clamped by means of a rubber bellows 11, blending with the rubber coating 7 of the housing 8 by means of a fold.

The static race 13 of the race ring 12 and the rotary face 14 of a counter race ring 15, being pressed onto the drive shaft through a rubber ring 16, together form a sealing face. Against the top face 17 of the counter race ring 15 an end face 18 of the fan 5 abuts. The joint face portion or boundary face 19 of the top face 17 of the counter race ring and the end face 18 of the fan 5 corresponds in this case to the top face 17 of the counter race ring 15. The edge portions 20 and 21 of the boundary face 19 therefore correspond with those of the top face 17 of the ring 15. Thus the counter race ring 15 is fixed in position in the axial direction by the end face 18 of the fan 5 on the one end and by the race ring 12, being biassed against the race 14 by the working of the spiral spring 9, on the other hand.

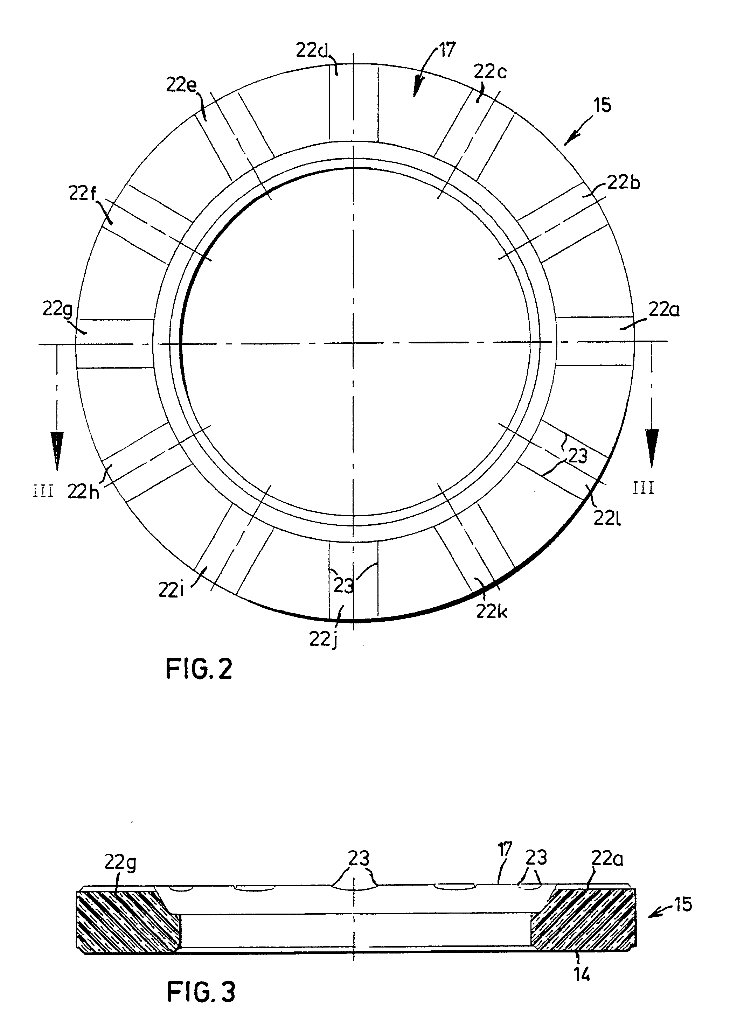

Figure 2 shows in more detail a top view of a counter race ring 15 which is suitable to be applied in the liquid pump as shown in fig. 1. Figure 3 shows a cross-section along the line III-III in fig. 2. At the top, the ring 15 is provided with recesses in the shape of twelve regularly divided slots 22a through I, extending, in the mounted state as shown in figure 1, in the radial direction from the edge portion 20 of the boundary face 19 between the fan 5 and the counter race ring 15 facing away from the drive shaft 3 up to the edge portion 21 of the boundary face facing towards the drive shaft. The total surface of the recesses 22a through I equals about half of the total surface of the boundary face, which in this case equals that of the top face 17 of the counter race ring 15.

The counter race ring 15 may be manufactured of sintered stainless steel, however it is preferably made of a ceramic material, such as aluminium oxide or silicon carbide, which is resistant to any agressive substances possibly contained in the liquid, such as silicates in the case of cooling water. Each of the slots 22a through I is preferably bevelled at the edges 23. The race 14 of the counter race ring 15 may have been polished in the ususal manner.

It should be understood that the invention is not restricted to the preferred embodiment of the liquid pump and that of the counter race ring as shown in the drawing. Many alterations can be made by any expert within the scope of the invention. The recesses may e.g. be provided in the end face of the fan 5 instead of in the counter race ring, or in addition thereto. Depending on the desired extent of corrosion resistance and the composition of the liquid, the dimensions of the recesses and thus their total surface can be suitably chosen. The recesses may have a different shape and direction than the radial slot described, e.g. slots curved over the top face.

It will be clear that the counter race ring provided with recesses according to the invention as described above can also be applied in other drive means, such as a compressor and the like, in which corrosion could occur at the boundary plane of the counter race ring and a means abutting the said ring which is made of a corrosion-sensitive material.

## Claims

1. Liquid pump comprising a housing with a wall section that is provided with a bore in which a shaft sealing is disposed and through which a drive shaft extends, wherein a transport means is mounted on the drive shaft for transporting the liquid, wherein the shaft sealing comprises a race ring connected to the housing, through which ring the drive shaft extends, and a counter race ring mounted on the drive shaft, against a surface of which an end face of the transport means abuts, and wherein the surface of the counter race ring together with the end face of the transport means defines a boundary face, **characterized in that** recesses have been provided at least at the boundary face defined by the end face of the transport means and the surface of the counter race ring.

2. Liquid pump according to claim 1, **characterized in that** the recesses are provided at the surface of the counter race ring.

3. Liquid pump according to claim 1 or 2, **characterized in that** the recesses extend at least from the edge portion of the boundary face facing away from the drive shaft.

4. Liquid pump according to one of claims 1 through 3, **characterized in that** the recesses extend at least up to the edge portion of the boundary face facing towards the drive shaft.

5. Liquid pump according to one of claims 1 through 4, **characterized in that** the recesses are distributed at least substantially evenly over the boundary face.

6. Liquid pump according to claim 5, **characterized in that** the total surface area of the recesses in the boundary face substantially equals half of the total surface area of the boundary face.

7. Liquid pump according to claim 5 or 6, **characterized in that** the recesses are constituted by a number of substantially radially extending slots.

8. Liquid pump according to claim 7, **characterized in that** the number of slots equals at least twelve.

9.  Liquid pump according to claim 7 or 8, **characterized in that** the slots are bevelled at the edges.

10. Counter race ring as described as part of the liquid pump according to one of claims 2-9.

**FIG. 1**

FIG. 2

FIG. 3

European
Patent Office

**EUROPEAN SEARCH REPORT**

Application Number

**EP 91 20 0729**

# DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-2 439 315 (NEWTON)<br>* column 1, lines 1 - 6 * * column 2, line 42 - column 3, line 70 * * column 4, lines 26 - 47; figures *.) * | 1,2 | F 04 D 1/00<br>F 04 D 29/08<br>F 04 D 29/12 |
| | — — — | | |
| Y | GB-A-2 081 399 (WOODVILLE)<br>* page 1, lines 5 - 7 * * page 1, line 52 - page 2, line 17 * * page 2, line 59 - page 3, line 22; figures *.) * | 1,2 | |
| | — — — | | |
| A | PATENT ABSTRACTS OF JAPAN vol. 7, no. 41 (M-194)(1186) 18 February 1983,<br>& JP-A-57 191493 (KIYATAPIRAA MITSUBISHI K.K.) 25 November 1982,<br>* the whole document * | 1 | |
| | — — — | | |
| A | FR-A-2 451 481 (MASCHINENFABRIK AUGSBURG NUR-NBERG AG)<br>* page 1, lines 1 - 10 * * page 3, line 1 - page 4, line 2; figure *.) * | 1 | |
| | — — — | | |
| A | FR-A-1 303 790 (WORTHINGTON CORPORATION) | | |
| | — — — — — | | TECHNICAL FIELDS SEARCHED (Int. Cl.5)<br><br>F 04 D<br>F 16 J<br>F 01 P |

The present search report has been drawn up for all claims

| Place of search | Date of completion of search | Examiner |
|---|---|---|
| The Hague | 02 July 91 | ZIDI K. |